# EUROPÄISCHE PATENTSCHRIFT

(11) **EP 1 360 229 B1**
(45) Veröffentlichungstag und Bekanntmachung des Hinweises auf die Patenterteilung: **11.01.2006**
(21) Anmeldenummer: 02750524.7
(22) Anmeldetag: 28.01.2002
(51) Int. Cl.: C08K 13/02, C08J 3/20, C08K 3/22, C08K 5/00, C08K 5/09

(54) **VERFAHREN ZUR HERSTELLUNG FLAMMHEMMENDER KUNSTSTOFFE**
METHOD OF PRODUCING FLAME-RETARDANT PLASTICS
PROCEDE DE PRODUCTION DE PLASTIQUES RETARDATEURS DE FLAMME

(30) Priorität: 26.01.2001 EP 01101795
(43) Veröffentlichungstag der Anmeldung: 12.11.2003
(73) Patentinhaber: ALBEMARLE CORPORATION, Baton Rouge, LA 70801-1765 (US)
(72) Erfinder: HERBIET, René, B-4700 Eupen (BE)
(74) Vertreter: UEXKÜLL & STOLBERG
(86) Internationale Anmeldenummer: PCT/EP2002/000843
(87) Internationale Veröffentlichungsnummer: WO 2002/072685

(56) Entgegenhaltungen:
- WO-A-96/26240

## Beschreibung

Die Erfindung betrifft ein Compoundierverfahren für die Herstellung selbstverlöschender Polymercompounds auf der Basis halogenfreier flammhemmender Füllstoffe.

Halogenfreie flammhemmende Füllstoffe wie z.B. Magnesium- oder Aluminiumhydroxid werden zum Zweck der optimalen Einarbeitung in Polymere und zur Verbesserung der Compoundeigenschaften an der Füllstoffoberfläche beschichtet. Dies wird z.B. mit Salzen von Fettsäuren gemäss DE-PS 26 59 933 oder z.B. mit Säuregruppen enthaltenden Polymeren gemäss EP-A 92 233 durchgeführt.

Es konnte gezeigt werden (WO 96/26240), dass der Einsatz von Fettsäurederivaten und Polysiloxanen in der Oberflächenbehandlung von Füllstoffen als Kompatibilisatoren zwischen Füllstoffen und Polymermatrix verbesserte Materialeigenschaften mit sich bringt. Weiterhin erlaubt der Einsatz der genannten Kompatibilisatoren die Verwendung preiswerterer, natürlicher oder synthetischer Füllstoffe mit grösseren Eigenschaftstoleranzen. Der durch die Verwendung von billigerem Füllstoffmaterial gewonnene Preisvorteil wird jedoch durch den separaten teuren Beschichtungsschritt teilweise oder ganz wieder kompensiert. Durch die aufwendigen, getrennten Arbeitsschritte der Beschichtung und anschliessenden Compoundierung blieb für die so entstehenden hochwertigen Compounds oft eine breite Anwendung, insbesondere im unteren Preissegment, versagt.

Hieraus ergab sich die Aufgabe, auch für Massenartikel (aber nicht nur für diese) eine kostengünstige Alternative zum Ersatz halogenhaltiger oder phosphorhaltiger, flammhemmender Compounds durch ein billigeres Verfahren für die Modifizierung von halogenfreien flammhemmenden Füllstoffen mit kompatibilitätsfördernden Additiven zu finden.

Überraschenderweise konnte diese Aufgabe mit einem Verfahren nach Patentanspruch 1 gelöst werden, durch eine *in situ*-Compoundierung von Polymeren mit, zum Zeitpunkt der Einarbeitung, nicht oberflächenmodifizierten Füllstoffen und kompatibilitätsfördernden Additiven.

Entgegen der Erwartung, dass bei diesem Vorgehen nur eine unverhältnismässige Erhöhung der Menge von kompatibilitätsfördernden Additiven zu einer befriedigenden Flammschutzwirkung mit ähnlichen rheologischen und mechanischen Materialeigenschaften wie bei der separaten Beschichtung der Füllstoffe führen würde, hat sich gezeigt, dass sich bei der *in situ-*Compoundierung auch bei identischen Zuschlagsmengen der kompatibilitätsfördernden Additive neben einer deutlichen Kostenreduzierung zum Teil sogar noch bessere Materialeigenschaften der so erhaltenen selbstverlöschenden Compounds erzielen lassen.

Das erfindungsgemässe *in situ*-Compoundierverfahren mit halogenfreien flammhemmenden Füllstoffen und kompatibilitätsfordemden Additiven ist bevorzugt für die Flammfestausrüstung thermoplastischer oder vemetzbarer Polyolefine, thermoplastischer Elastomere und Kautschukcompounds geeignet. Einige Beispiele sind Polyethylen und seine Copolymere, Polypropylen und seine Copolymere, Polyamide, aliphatische Polyketone oder Ethylen-Propylen-Dien-Terpolymere (EPDM) und Styrol-Butadien-Kautschuk (SBR).

Geeignete Hydroxide des Magnesiums für eine wirksame Flammschutzausrüstung sind z.B. natürliche Mg(OH)₂-Typen wie z.B. Brucit oder Seewasser-Typen, natürliche Magnesiumhydroxycarbonate wie z.B. Huntit oder Hydromagnesit, oder synthetische Magnesiumhydroxide wie sie z.B. unter dem Warenzeichen MAGNIFIN® von der Martinswerk GmbH vertrieben werden. Die Magnesiumhydroxide werden als Flammfestausrüstung vorzugsweise im Hochtemperaturbereich eingesetzt, d.h. in Polymeren, die bis ca. 340 °C verarbeitbar sind, vorzugsweise in thermoplastischen oder vemetzbaren Polyolefinen, thermoplastischen Elastomeren und Kautschukcompounds.

Geeignete Hydroxide des Aluminiums sind z.B. natürliche Al(OH)₃-haltige Materialien wie z.B. Hydrargillit oder Gibbsit, (Al₂O₃ • x H₂O)-haltige Materialien (mit x < 3) wie z.B. Böhmit oder synthetische Aluminiumhydroxide wie sie z.B. unter den Warenzeichen MARTIFIN® oder MARTINAL® von der Martinswerk GmbH in Bergheim (Deutschland) vertrieben werden. Zweckmässig kommen die Hydroxide des Aluminiums in Compounds insbesondere mit thermoplastischen oder vemetzbaren Polyolefinen wie z.B. Polyethylen, seine Copolymere wie z.B. Ethylen-Vinylacetat-Copolymere (EVA), oder auch Kautschukmischungen zum Einsatz, die bis ca. 200 °C verarbeitbar sind.

Je nach gefordertem Eigenschaftsprofil des gefüllten Polymers können die genannten Hydroxide des Aluminiums und/oder Hydroxide des Magnesiums alleine oder in beliebigen Mischungsverhältnissen, sowie auch unter Zumischung eines oder mehrerer Oxide des Aluminiums, des Magnesiums, des Titans oder des Zirkoniums oder mit weiteren Füllstoffmaterialien wie z.B. Calciumcarbonat, Talkum oder calcinierten oder nicht calcinierten Clays verwendet werden, um z.B. Abriebverhalten, Härte oder Bewitterungsverhalten zu steuern. Die genannten Oxide können in handelsüblicher Qualität verwendet werden.
Der Gehalt an Füllstoff in der betreffenden Polymermatrix bewegt sich, abhängig von dem gewünschten Grad an Flammfestigkeit, in der Regel zwischen 5 Gew. % und 90 Gew. % des Compounds, vorzugsweise zwischen 20 Gew. % bis 70 Gew. % des Compounds.

Erfindungsgemäss erfolgt die *in situ*-Compoundierung des halogenfreien flammhemmenden Füllstoffs in einer Variante mit einem Fettsäurederivat aus der Gruppe der Polymerfettsäuren, der Ketofettsäuren, der Fettalkyloxazoline oder -bisoxazoline und gegebenenfalls einem Siloxanderivat oder in einer anderen Variante mit einer Fettsäure und einem Siloxanderivat.
Unter Polymerfettsäuren werden durch Oligomerisierung, wie z.B. durch Di- oder Trimerisierung von entsprechenden Fettsäuren hergestellte Verbindungen verstanden. Geeignete Vertreter sind z.B. die Polystearinsäure, die Polylaurinsäure oder die Polydecansäure (Henkel Referate 28, 1992, S. 39ff).
Unter Ketofettsäuren werden ketogruppenhaltige Fettsäuren mit vorzugsweise 10 bis 30 C-Atomen verstanden. Bevorzugter Vertreter einer Ketofettsäure ist die Ketostearinsäure (Henkel Referate 28, 1992, S. 34ff).
Unter Fettalkyloxazolinen werden die in 2-Stellung alkyl- bzw. hydroxyalkylsubstituierten Oxazoline verstanden. Die Alkylgruppe weist dabei vorzugsweise 7 bis 21 C-Atome auf. Bisoxazoline sind Verbindungen, die aus den Hydroxalkyloxazolinen durch Umsetzung mit Diisocyanaten synthetisiert werden. Ein bevorzugter Vertreter ist z.B. das 2-Undecyl-oxazolin (Henkel Referate 28, 1992 S. 43ff).

In den folgenden Erläuterungen werden bei Mengenangaben mit Teilen Gewichtsteile bezeichnet.

Die genannten Fettsäurederivate werden entweder einzeln oder in Kombination in einer Menge von 0,01 bis 10 Teilen, vorzugsweise von 0,05 bis 5 Teilen, pro 100 Teilen Füllstoff eingesetzt.

Unter einer Fettsäure wird bei der zweiten Variante entweder eine gesättigte oder ungesättigte natürliche Fettsäure mit vorzugsweise 10 bis 30 C-Atomen, eine ein- oder mehrfach ungesättigte Hydroxyfettsäure mit vorzugsweise 10 bis 30 C-Atomen wie z.B. Hydroxynervonsäure oder Ricinolsäure oder eine gesättigte Hydroxyfettsäure wie z.B. Hydroxystearinsäure oder ein Derivat der vorstehenden Verbindungen verstanden. Geeignete natürliche Fettsäuren sind z.B. Stearinsäure, Laurinsäure, Myristinsäure, Palmitinsäure, Ölsäure oder Linolensäure. Als Fettsäurederivate können Fettsäuresalze oder modifizierte Fettsäuren wie z.B. Stearinsäureglycidylmethacrylat eingesetzt werden. Bevorzugt werden gesättigte Fettsäuren oder Hydroxyfettsäuren bzw. Derivate davon eingesetzt.

Die genannten Fettsäuren können entweder einzeln oder in Kombination in einer Menge von 0,01 bis 10 Teilen, vorzugsweise von 0,05 bis 5 Teilen, pro 100 Teilen Füllstoff eingesetzt werden.

Um das geforderte Eigenschaftsprofil zu erzielen, ist in der Variante mit Fettsäuren die Siloxankomponente zwingend erforderlich.

Die Zuschlagsmenge der Siloxankomponente liegt bei 0,01 bis 20 Teilen, vorzugsweise bei 0,05 bis 10 Teilen, pro 100 Teilen Füllstoff.

Geeignete Siloxanderivate sind Oligoalkylsiloxane, Polydialkylsiloxane wie z.B. Polydimethylsiloxan, Polydiethylsiloxan, Polyalkylarylsiloxane wie z.B. Polyphenylmethylsiloxan oder Polydiarylsiloxane wie z.B. Polyphenylsiloxan.

Die genannten Siloxane können mit reaktionsfähigen Gruppen wie z.B. Hydroxy-, Amino-, Vinyl-, Acryl-, Methacryl-, Carboxy- oder Glycidylgruppen funktionalisiert sein.

Als Siloxanderivate werden bevorzugt hochmolekulare Polydialkylsiloxane, die gegebenenfalls mit den genannten Gruppen funktionalisiert worden sind, eingesetzt.

Für die Herstellung besonders preisgünstiger Compounds kann, unter Abnahme der Flammschutzwirkung, in einer bevorzugten Ausführungsform der halogenfreie flammhemmende Füllstoff bis zu einer Menge von 70 Gew. % Füllstoff, vorzugsweise bis zu einer Menge von 50 Gew. % Füllstoff, durch Calciumcarbonat ersetzt werden.

Die kompatibilitätsfördernden Additive, die zum Teil in flüssigem Aggregatzustand vorliegen, können beispielsweise zusammen mit Trägermaterialien wie pyrogene Kieselsäure oder Fällungskieselsäure verwendet werden.

Bevorzugte pyrogene Kieselsäuren sind die Aerosil®-Typen von Degussa. Bevorzugte Fällungskieselsäuren sind die Sipernat®-Typen von Degussa.

Die genannten Trägermaterialien können abhängig vom kompatibilitätsfördernden Additiv in einer Menge von 0,1 bis 10 Teilen pro 100 Teilen Füllstoff eingesetzt werden.

Die gemäss Patentanspruch 1 erhaltenen gefüllten Compounds können zusätzlich faserförmige Verstärkerstoffe enthalten.

Zu den Faserstoffen zählen beispielsweise Glasfasern, Steinfasern, Metallfasern, polykristalline keramische Fasern, einschliesslich der Einkristalle, den sogenannten "whiskers" und ebenso alle aus synthetischen Polymeren herrührenden Fasern, wie z.B. Aramid-, Kohlenstoff-, Polyamid-, Polyacryl- und Polyesterfasern.

Falls gewünscht, können die Compounds mit geeigneten Pigmenten und/oder Farbstoffen und/oder mit weiteren anwendungsbezogenen Zusätzen oder Hilfsstoffen wie z.B. Polyethylenwachse, oder auch Stabilisatoren zur Stabilisierung des Kunststoffsystems oder Mischungen daraus versehen sein.

Ferner können Vernetzungsmittel wie z.B. Triallyl-cyanurat und/oder Peroxide zugegeben werden, falls das Compound in einem weiteren Verarbeitungsschritt vernetzt werden soll.

Zur *in situ*-Compoundierung wird das ungefüllte Polymer zusammen mit dem unbehandelten halogenfreien flammhemmenden Füllstoff zweckmässig in einem geeigneten Mischer, vorzugsweise in einem Mischer der hohe Scherkräfte ermöglicht, mit den erwähnten Additiven versehen. Dabei kann die Zugabe in gewählter Reihenfolge in bestimmten Zeitintervallen bei unterschiedlichen Temperaturen und bei den Additiven angepassten Prozessparametem erfolgen. Es ist ebenso möglich dem Mischer, eine Vormischung der Additive zusammen mit den halogenfreien flammhemmenden Füllstoffen zuzuführen.

In einer bevorzugten Ausführungsform wird die Compoundierung in einem Innenmischer, wie, z.B. GK E 5 mit ineinandergreifendem Rotorsystem der Fa. Werner & Pfleiderer ausgeführt.

In einer weiteren bevorzugten Ausführungsform wird die Compoundierung auf einem heizbaren Walzwerk, z.B. von der Fa. Collin, Typ W150M, ausgeführt. Dabei werden die unbehandelten Füllstoffe mit den kompatibilitätsfördernden Additiven und eventuell weiteren Zuschlägen dem vorher auf dem Walzwerk aufgeschmolzenen Polymer zugegeben. Die Zugabe in gewählter Reihenfolge kann in bestimmten Zeitintervallen bei unterschiedlichen Temperaturen und bei den Additiven angepassten Prozessparametern erfolgen.

Als weitere Compoundierungsaggregate bieten sich für das erfindungsgemässe Verfahren weitere handelsübliche Mischaggregate an, wie z.B. Doppelschneckenextruder oder Ko-Kneter, wie sie beispielsweise von der Fa. Buss Compounding Systems AG (Pratteln, Schweiz) hergestellt werden oder sog. Continuous Mixer, wie sie beispielsweise von der Fa. Farrel (Ansonia, Connecticut, U.S.A.) vertrieben werden.

### Beispiele

In den Anwendungsbeispielen bezeichnet phr Gew.-Teile pro 100 Gew.-Teile Polymer.

### Beispiel V1 (Vergleich)

150 phr unbeschichteter Magnesiumhydroxid-Füllstoff (MDH) MAGNIFIN® H 5 (Martinswerk GmbH) wurden mit 100 phr Ethylen/Vinylacetat-Polymer (EVA) Escorene Ultra® UL00119 (EVA, 19 Gew. % VA-Copolymer, Exxon) in einem Innenmischer GK 5 E (Werner & Pfleiderer, Rotordrehzahl 50 U/min, Kühlwassertemperatur 50 °C, Maschinenfüllgrad 75%) *in situ* unter Zugabe von 0,4 phr Alterungsschutzmittel Irganox® 1010 (Ciba) zu einem Compound verarbeitet. Bei einer Compoundtemperatur von 180 °C wurde die Mischung ausgeworfen.

### Beispiel V2 (Vergleich)

Wie in WO 96/26240 beschrieben, wurden im Henschel-Mischer 10 kg MDH-Füllstoff MAGNIFIN® H 5 mit dem Fettsäuregemisch Pristerene® 4900 (1,5 Gew. % bezogen auf den Füllstoff, Unichema Chemie) und Silikonöl AK150 (0,3 Gew. % bezogen auf den Füllstoff, Wacker Chemie) beschichtet.

150 phr derart beschichteter MDH-Füllstoff wurden mit 100 phr Escorene Ultra® UL00119 und 0,4 phr Irganox® 1010 wie in Beispiel V1 zu einem Compound verarbeitet. Bei einer Compoundtemperatur von 180 °C wurde die Mischung ausgeworfen.

### Beispiel 1

150 phr unbeschichteter MDH-Füllstoff MAGNIFIN® H 5 wurden mit 100 phr Escorene Ultra® UL00119 *in situ* unter Zugabe von 0,4 phr Irganox® 1010, Silikonöl AK150 (0,3 Gew. % bezogen auf den Füllstoff) und Pristerene® 4900 (1,5 Gew. % bezogen auf den Füllstoff) im Innenmischer wie in Beispiel V1 zu einem Compound verarbeitet. Bei einer Compoundtemperatur von 180 °C wurde die Mischung ausgeworfen.

### Beispiel 2

80 phr Escorene Ultra® UL00328 (EVA, 27 Gew.-% VA-Copolymer, Exxon) und 20 phr mLLDPE ML2518FL (Exxon) wurden *in situ* auf einem Walzwerk bei einer Walzentemperatur von 130 °C mit 150 phr unbeschichtetem Aluminiumhydroxid-Füllstoff (ATH) MARTINAL® ON4608 (Martinswerk GmbH), Silikonöl AK150 (0,5 Gew. % bezogen auf den Füllstoff), Pristerene® 4912 (2,5 Gew. % bezogen auf den Füllstoff, Unichema Chemie) und 0,5 phr Irganox® 1010 compoundiert. Zuerst wurde das Polymersystem auf der Walze aufgeschmolzen bis sich ein Fell gebildet hatte. Anschliessend wurden der unbeschichtete Füllstoff und die Additive zugegeben. Die Compoundierzeit betrug 35 Minuten.

### Beispiel V3 (Vergleich)

Wie in WO 96/26240 beschrieben, wurden im Henschel-Mischer 10 kg unbeschichteter ATH-Füllstoff MARTINAL® ON4608 mit Pristerene® 4912 (2,5 Gew.-% bezogen auf den Füllstoff) und Silikonöl AK150 (0,5 Gew.-% bezogen auf den Füllstoff) beschichtet.
Auf einem Walzwerk wurden 150 phr derart beschichteter ATH-Füllstoff mit 80 phr Escorene Ultra® UL00328 und 20 phr mLLDPE ML2518FL bei einer Walzentemperatur von 130 °C compoundiert. Zuerst wurde das Polymersystem auf der Walze aufgeschmolzen bis sich ein Fell gebildet hat. Anschliessend wurden der beschichtete Füllstoff und 0,5 phr Irganox® 1010 zugegeben. Die Compoundierzeit betrug 35 Minuten.

### Beispiel V4 (Vergleich)

186 phr unbeschichteter MDH-Füllstoff (MDH) MAGNIFIN® H 5 und 100 phr Novolen® 3200 H (BASELL) wurden auf einem Walzwerk bei einer Walzentemperatur von 175 °C compoundiert. Zuerst wurde das Polymer auf der Walze aufgeschmolzen bis sich ein Fell gebildet hat. Anschliessend wurde der unbeschichtete Füllstoff zugegeben. Die Compoundierzeit betrug 35 Minuten.

### Beispiel 3

186 phr unbeschichteter MDH-Füllstoff MAGNIFIN® H 5 und 100 phr Novolen® 3200 H wurden in situ unter Zugabe von Silikonöl AK150 (0,5 Gew. % bezogen auf den Füllstoff) und Pristerene® 4912 (1,0 Gew. % bezogen auf den Füllstoff) auf einem Walzwerk bei einer Walzentemperatur von 175 °C compoundiert. Zuerst wurde das Polymerauf der Walze aufgeschmolzen bis sich ein Fell gebildet hat. Anschliessend wurden der unbeschichtete Füllstoff und die Beschichtungsmittel zugegeben. Die Compoundierzeit betrug 35 Minuten.

### Beispiel V5 (Vergleich)

Im Henschel-Mischer wurden 10 kg MDH-Füllstoff MAGNIFIN® H 5, wie in WO 96/26240 beschrieben, mit Pristerene® 4912 (1,0 Gew. % bezogen auf den Füllstoff) und Silikonöl AK150 (0,5 Gew. % bezogen auf den Füllstoff) beschichtet.
186 phr derart hergestellter beschichteter MDH-Füllstoff wurde mit 100 phr Novolen® 3200 H auf einem Walzwerk bei einer Walzentemperatur von 175 °C compoundiert. Zuerst wurde das Polymersystem auf der Walze aufgeschmolzen bis sich ein Fell gebildet hat. Anschliessend wurde der beschichtete Füllstoff zugegeben. Die Compoundierzeit betrug 35 Minuten.

Die Messergebnisse der untersuchten Parameter der Anwendungsbeispiele werden in Tabelle 1 gezeigt.

### Erläuterungen zur Tabelle und den Bestimmungsmethoden:

| | |
|---|---|
| Zugfestigkeit/Reissdehnung an gespritzten Probekörpem für die Polypropylen-Compounds | nach DIN 53 455 |
| Zugfestigkeit/Reissdehnung an extrudierten, gestanzten Probekörpern für die EVA-Compounds | nach DIN 53 504 |
| Schmelzindex (MFI, Meltflow Index) | nach DIN 53 735 |
| Spez. Widerstand | nach DIN 53 482 |
| n.b. | nicht bestimmt |

**Tabelle 1:**

| Beispiel | Zugfestigkeit [N/mm²] | Reissdehnung % | MFI (190 °C/10 kg) [g/10 min] | Spez. Widerstand (28 d in 50 °C H₂O) [Ω•cm] |
|---|---|---|---|---|
| V1 | 11 | 140 | 1,1 | 3,0•10¹² |
| V2 | 8,3 | 470 | 3,8 | 8,9•10¹⁴ |
| 1 | 9,7 | 520 | 4,1 | 6,3•10¹⁴ |
| 2 | 3,2 | 390 | n.b. | n.b. |
| V3 | 3,5 | 409 | n.b. | n.b. |
| V4 | 20,2 | 1,5 | nicht messbar bei 230 °C/5 kg | n.b. |
| 3 | 13,3 | 234 | 7,4 bei 230 °C/5 kg | n.b. |
| V5 | 14,5 | 180 | 7,2 bei 230 °C/5 kg | n.b. |

## Patentansprüche

1. Verfahren zur Herstellung gefüllter flammhemmender thermoplastischer oder vernetzbarer Polyolefine oder thermoplastischer technischer Kunststoffe oder thermoplastischer Elastomere oder Kautschukmischungen, enthaltend
a) mindestens ein thermoplastisches oder vernetzbares Polymer oder ein thermoplastisches Elastomer,
b) mindestens einen halogenfreien flammhemmenden aluminium- oder magnesiumhydroxidhaltigen Füllstoff in einer Menge von 5 Gew. % bis 90 Gew. %,
c) ein kompatibilitätsförderndes Additiv, bestehend aus
i) mindestens einem Fettsäurederivat aus der Gruppe der Polymerfettsäuren, der Ketofettsäuren, der Fettalkyl-oxazoline oder -bisoxazoline in einer Menge von 0,01 bis 10 Teilen pro 100 Teilen halogenfreier flammhemmender Füllstoff und gegebenenfalls einem Siloxanderivat in einer Menge von 0,01 bis 20 Teilen pro 100 Teilen halogenfreier flammhemmender Füllstoff und/oder
ii) mindestens einer Fettsäure in einer Menge von 0,01 bis 10 Teilen pro 100 Teilen halogenfreier flammhemmender Füllstoff und einem Siloxanderivat in einer Menge von 0,01 bis 20 Teilen pro 100 Teilen halogenfreier flammhemmender Füllstoff,
**dadurch gekennzeichnet, dass** das Polymer (a) *in situ* mit dem Füllstoff (b) ohne vorherige Oberflächenmodifizierung und dem kompatibilitätsfördernden Additiv (c) zu einem flammhemmenden Compound verarbeitet wird.

2. Verfahren nach Anspruch 1, **dadurch gekennzeichnet, dass** als unbeschichteter halogenfreier flammhemmender Füllstoff synthetische Magnesium- oder Aluminiumhydroxide oder natürliche magnesium- oder aluminiumhydroxidhaltige Mineralien oder natürliche Magnesiumhydroxide oder natürliche Magnesiumhydroxycarbonate oder beliebige Mischungen davon verwendet werden.

3. Verfahren nach Anspruch 1 oder 2, **dadurch gekennzeichnet, dass** der halogenfreie flammhemmende Füllstoff bis zu einer Menge von 70 Gew. % Füllstoff durch Calciumcarbonat ersetzt wird.

4. Verfahren nach einem der Ansprüche 1 bis 3, **dadurch gekennzeichnet, dass** die einzelnen Komponenten in einem Innenmischer compoundiert werden.

5. Verfahren nach einem der Ansprüche 1 bis 3, **dadurch gekennzeichnet, dass** die einzelnen Komponenten auf einem Walzwerk nach Aufschmelzen des Polymers oder Polymersystems direkt auf der Walze compoundiert werden.

6. Verfahren nach einem der Ansprüche 1 bis 3, **dadurch gekennzeichnet, dass** in einem Ko-Kneter compoundiert wird.

7. Verfahren nach einem der Ansprüche 1 bis 3, **dadurch gekennzeichnet, dass** in einem Doppelschneckenextruder compoundiert wird.

8. Verfahren nach einem der Ansprüche 1 bis 3, **dadurch gekennzeichnet, dass** in einem Continuous Mixer compoundiert wird.

## Claims

1. Process for the preparation of filled flame-retardant thermoplastic or cross-linkable polyolefins or thermoplastic industrial plastics or thermoplastic elastomers or rubber mixtures, comprising
a) at least one thermoplastic or cross-linkable polymer or a thermoplastic elastomer,
b) at least one halogen-free flame-retardant aluminium- or magnesium hydroxide-containing filler in a quantity of 5 to 90 wt.%,
c) a compatibility-promoting additive, consisting of
i) at least one fatty acid derivative from the group of the polymer fatty acids, the keto fatty acids, the fatty alkyl-oxazolines or -bisoxazolines in a quantity of 0.01 to 10 parts per 100 parts halogen-free flame-retardant filler and optionally a siloxane derivative in a quantity of 0.01 to 20 parts per 100 parts halogen-free flame-retardant filler and/or
ii) at least one fatty acid in a quantity of 0.01 to 10 parts per 100 parts halogen-free flame-retardant filler and a siloxane derivative in a quantity from 0.01 to 20 parts per 100 parts halogen-free flame-retardant filler,
**characterised in that** the polymer (a) is processed *in situ* with the filler (b) without prior surface modification and with the compatibility-promoting additive (c) to a flame-retardant compound.

2. Process according to Claim 1, **characterised in that** a synthetic magnesium- or aluminium hydroxide or natural magnesium- or aluminium hydroxide-containing mineral or natural magnesium hydroxide or natural magnesium hydroxy carbonate or any mixtures thereof are used as the uncoated halogen-free flame-retardant filler.

3. Process according to Claim 1 or 2, **characterised in that** calcium carbonate substitutes up to a quantity of 70 wt.% of the halogen-free flame-retardant filler.

4. Process according to one of Claims 1 to 3, **characterised in that** the individual components are compounded in an internal mixer.

5. Process according to one of Claims 1 to 3, **characterised in that** the individual components are compounded on a roll-mill after melting the polymer or polymer system directly on the roll.

6. Process according to one of Claims 1 to 3, **characterised in that** the compounding is carried out in a co-kneader.

7. Process according to one of Claims 1 to 3, **characterised in that** compounding is carried out in a twin-screw extruder.

8. Process according to one of Claims 1 to 3, **characterised in that** compounding is carried out in a continuous mixer.

## Revendications

1. Procédé de préparation de polyoléfines thermoplastiques ou réticulables ou de matières thermoplastiques techniques ou d'élastomères ou de mélanges de caoutchouc thermoplastiques, retardateurs de flamme, chargés, contenant
a) au moins un polymère thermoplastique ou réticulable ou un élastomère thermoplastique,
b) au moins une charge retardateur de flamme, exempte d'halogène, contenant un hydroxyde d'aluminium ou de magnésium, en une quantité de 5% en poids à 90% en poids,
c) un additif favorisant la compatibilité, consistant en
i) au moins un dérivé d'acide gras du groupe des acides gras polymères, des cétoacides gras, des (alkyl gras)oxazolines ou -bisoxazolines, en une quantité de 0,01 à 10 parties par 100 parties de charge retardateur de flamme exempte d'halogène et le cas échéant, un dérivé de siloxane en une quantité de 0,01 à 20 parties par 100 parties de charge retardateur de flamme, exempte d'halogène et/ou
ii) au moins un acide gras en une quantité de 0,01 à 10 parties par 100 parties de charge retardateur de flamme, exempte d'halogène et un dérivé de siloxane en une quantité de 0,01 à 20 parties par 100 parties de charge retardateur de flamme, exempte d'halogène,
**caractérisé en ce que** le polymère (a) est transformé *in situ* avec la charge (b) sans modification préalable des surfaces et l'additif favorisant la compatibilité (c), en un compound retardateur de flamme.

2. Procédé selon la revendication 1, **caractérisé en ce que** l'on utilise comme charge retardateur de flamme, exempte d'halogène, non revêtue, des hydroxydes de magnésium ou d'aluminium synthétiques ou des minéraux naturels contenant de l'hydroxyde de magnésium ou d'aluminium ou des hydroxydes de magnésium naturels ou des hydroxycarbonates de magnésium naturels ou des mélanges quelconques de ceux-ci.

3. Procédé selon la revendication 1 ou 2, **caractérisé en ce que** la charge retardateur de flamme, exempte d'halogène est remplacée en une quantité de jusqu'à 70% en poids de la charge, par du carbonate de calcium.

4. Procédé selon l'une quelconque des revendications 1 à 3, **caractérisé en ce que** les composants respectifs sont transformés en compound dans un mélangeur interne.

5. Procédé selon l'une quelconque des revendications 1 à 3, **caractérisé en ce que** les composants sont transformés en compound sur un laminoir après fusion du polymère ou du système polymère, directement sur le cylindre.

6. Procédé selon l'une quelconque des revendications 1 à 3, **caractérisé en ce que** l'on transforme en compound dans un Ko-malaxeur.

7. Procédé selon l'une quelconque des revendications 1 à 3, **caractérisé en ce que** l'on transforme en compound dans une extrudeuse à double vis.

8. Procédé selon l'une quelconque des revendications 1 à 3, **caractérisé en ce que** l'on transforme en compound dans un mélangeur continu.
